# EUROPEAN PATENT SPECIFICATION

(11) **EP 2 751 420 B1**
(45) Date of publication and mention of the grant of the patent: **20.07.2016**
(21) Application number: 12741018.1
(22) Date of filing: 02.08.2012
(51) Int. Cl.: F03B 13/26, F03B 3/06, F03B 15/00

(54) **A SENSOR ARRANGEMENT FOR A TIDAL GENERATOR**
SENSORANORDNUNG FÜR EINEN GEZEITENENERGIEGENERATOR
AGENCEMENT DE CAPTEURS POUR GÉNÉRATEUR DE MARÉE

(30) Priority: 31.08.2011 GB 201114943
(43) Date of publication of application: 09.07.2014
(73) Proprietor: Rolls-Royce plc, London SW1E 6AT (GB)
(72) Inventor: CHIR, Adam, Derby Derbyshire DE24 8BJ (GB)
(74) Representative: Rolls-Royce plc
(86) International application number: PCT/EP2012/065099
(87) International publication number: WO 2013/029909

(56) References cited:
- WO-A2-2011/095398
- GB-A- 2 461 286
- US-A1- 2004 066 043
- US-A1- 2009 087 301

## Description

This invention relates to a sensor arrangement for monitoring the flow conditions experienced by a tidal generator. In particular, invention relates to an apparatus for controlling the exit swirl from the generator so as to maximise efficiency.

Tidal barrage schemes are known in the art. An example of a tidal barrage scheme is the one at La Rance in France. This scheme uses 24-off 10 MW low head bulb turbines to capture energy from an eight metre tidal range using a 22.5 km² basin.

It is known that for all types of turbine that optimum efficiency is obtained when the exit swirl velocity from the turbine is zero as the losses in the outlet flow are minimised. Typically, variable pitch rotor and stator vanes are used to provide the desired output flow across a range of operating conditions. These systems are used in accordance with predetermined parameters derived from measurements. However, it is very difficult to account for a uniform inlet flow in this way.

WO 2011095398 discloses a bidirectional water turbine comprising an upstream rotor module and a downstream rotor module. Each of the upstream and downstream rotor modules carry a rotor comprising a plurality of blades. The upstream and downstream rotor modules are individually removable from the turbine, the turbine being configured to operate with one of the upstream and downstream rotor modules removed. Again however, it is difficult to control the exit swirl from the generator so as to maximise efficiency.

The present invention seeks to provide a monitoring apparatus and method which accounts for a wide variety of flow conditions.

In a first aspect, the present invention provides a generator arrangement, comprising: a generator located within a flow passage wherein the flow passage has an inlet and an outlet, and the generator includes at least one contra-rotating blade arrangement which is configured to be rotated about a principle axis of the generator by a flow of liquid in the flow passage, and wherein the at least one blade has an adjustable pitch; an array of sensors located downstream of the blade arrangement for detecting the outlet flow conditions;
a controller for determining the outlet flow conditions on the basis of conditions sensed by the sensor array and a pitch control system for adjusting the pitch of the at least one blade so as to affect the flow conditions at the outlet of the flow passage.

The arrangement of the present invention allows the flow conditions exiting the outlet of a flow passage to be monitored and the pitch of the generator blades to be adjusted. In doing so, it is possible to reduce the exit swirl velocity of the generator flow passage and thereby increase the efficiency of the rotating blades.

The generator arrangement may be part of a barrage tidal scheme. As such the generator arrangement may be located within a dam or barrage. The dam or barrage may be across an estuary or lagoon. The barrage or dam may include a plurality of generator arrangements. The flow passage may be a passage through the dam or barrage. Alternatively, the generator arrangement may be for use in an open flow. In an open flow arrangement the flow passage would be defined in relation to the rotational path of the blade arrangement.

The blade arrangement may include contra-rotating blades.

The at least one sensor array may be located on a support member. The support member may be located within the flow passage. The support member may be mounted the dam or barrage. The support member may be attached to a hub of the generator. The support member may be a generator blade. In the case where the generator has a contra-rotating blade arrangement, the support member may be located between the contra-rotating blades. The support member may be a strut for supporting the electrical generator within the flow passage.

The sensor array may include three upstream sensors. The sensor array may include one downstream sensor. The sensors may be pressure sensors. The pressure sensors may be of a diaphragm type.

The sensors may be located within a cavity of the support member. The cavity may have a longitudinal axis extending from the surface of the support member. The cavity being sized and shaped so as to expose the sensor to a predetermined angle of the flow velocity along the longitudinal axis of the cavity. The cavity may be a bore or slot within the support member. The bore or slot may be elongate having a longitudinal axis. The longitudinal axis may be orthogonal to the sensor.

The sensor array may include at least one upstream sensor and one downstream sensor along a common axis. The common axis may run in a direction parallel to the principle axis of the generator. The sensor array may be included at least two lateral sensors arranged equidistantly from the common axis. The upstream sensor may be located at a mid-point between the two lateral sensors.

The sensor arrays may be mounted on a curved support member. For example, the cross section of the support member may be circular or oval. The cross section of the supprot member may be elliptical. The longitudinal axis of the cavities of the lateral sensors may be separated by an included angle of approximately 60 degrees.

The embodiments of invention will now be described here file for this in which:
Figure 1 shows a cross section of a generator according to the present invention.
Figure 2 shows a cross section of a strut having a sensor arrangement according to one embodiment of the present invention.

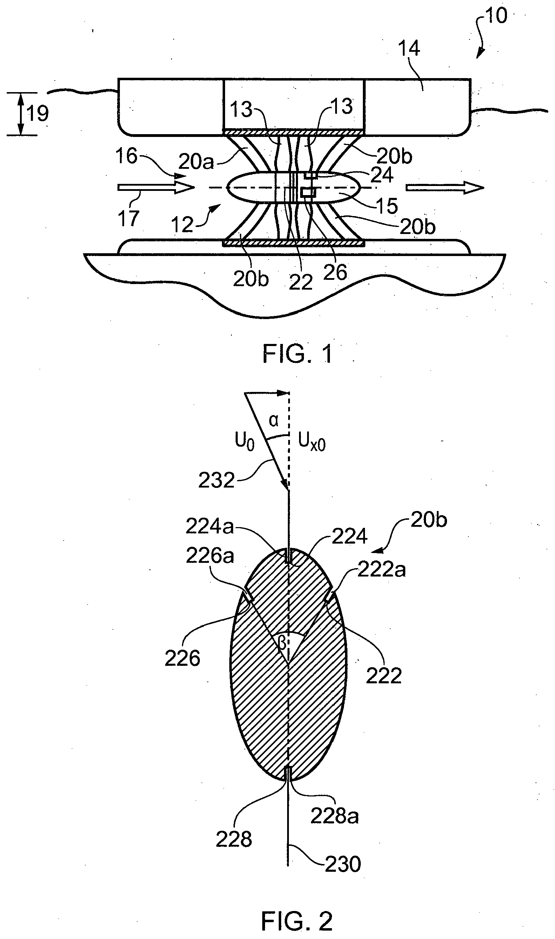

The tidal barrage generator arrangement 10 shown in Figure 1 includes a contra-rotating generator 12 located within a dam or barrage structure 14. The generator includes contra rotating blades 13 which are rotatably mounted to a hub 15 which is held in a stationary position during use. The generator 12 includes a pitch adjustment system 24 within the hub which is operable to adjust the pitch of the blade, and thus the area of the blades 13 exposed to the inlet flow and the generated torque. Such pitch adjustment systems are known and typically used to control the power generated at any given instance.

Typically, the barrage 14 would extend across a tidal estuary or lagoon and include several electrical generators 12. The generator 12 sits within a flow passage in the form of a cylindrical passageway 16 having an inlet and an outlet. In use water flows 17 through the passageway 16 when a head 19 is created on one side of the barrage 14, i.e. when there is tidal movement. The generator 12 is configured such that the blades 13 contra-rotate when the tidal flow passes from one side of the barrage 14 to the other, thereby generating electricity for export to a grid or the like.

The tidal barrage structure 14 includes support members in the form of inlet struts 20a and outlet struts 20b which locate the generator body within the flow channel. The struts 20a, 20b are arranged to transfer the mass of the generator hub 15, the axial thrust created by the tidal flow, and to react the torque from the drive train. It will be appreciated that there may be a plurality of struts 20a, 20b circumferentially spaced around the flow passage 16 as required.

In the described embodiment one of the downstream struts 20b includes sensors which are arranged to detect the exit swirl flow conditions as the water leaves the generator 12. This information can then be used by a controller 26 to determine the angle of the rotor blades (and stators if they are used) to adjust the exit swirl flow, thereby minimising it and maximising the efficiency of the generator.

Figure 2 shows a cross section of one of the supporting struts 20b containing an array of sensors. The strut 20b is elliptical in cross-section and includes four flow sensors 222, 224, 226, 228. In this embodiment, the major axis 230 of the strut 20b is aligned so as to run parallel to the principle axis 22 of the contra-rotating blades of the generator 12 and thus in line with an axial tidal flow 17. Two of the flow sensors 224, 228 are positioned on the major axis 230 of the strut 20b, one on the upstream facing surface of the strut (the upstream sensor 224), and one on the downstream facing surface of the strut (the downstream sensor 228). Two further lateral sensors 222, 226 are arranged on the upstream facing surface, equidistantly on either side of the upstream sensor 224.

The sensors 222 - 228 are all mounted within a cavity in the respective surface of the strut 20b. In the embodiment, the cavities are in the form of bores 222a - 228a having a longitudinal axis which extends from the surface of the strut 20b. The longitudinal axes of the upstream and downstream sensor bores 224a, 228a are coaxial with each other and the major axis 230 of the strut 20b. The longitudinal axes of the lateral sensor bores 222a, 226a are inclined at an angle of β. The magnitude of β can be any required by the particular arrangement of the strut 20b and by the flow, but is approximately 60 degrees in the described embodiment. The sensors 222 - 228 are located at the terminal end of each of the bores 222a - 228a and so only experience the component of flow in the direction which corresponds to the longitudinal axis of the bore. The skilled person will appreciate that to obtain an accurate reading of dynamic pressure it may be necessary to provide a cavity in the form of channel through which the sea water can flow, rather than a closed bore.

The sensors used in this arrangement can be pressure sensors in the form of diaphragm sensors or the like.

The sensors 222-228 detect the exit swirl of the flow through the turbine at any head and flow condition. This information may then be fed to the turbine control system which is in communication with the pitch control system housed within the hub. Thus, the turbine control system may vary the pitch of the upstream and downstream rotor blades to minimise exit swirl at all head and flow conditions accordingly. The turbine control system may be housed within the hub or remotely and will typically include some form of data processing hardware operating under the influence of one or more algorithms to carry out the necessary operations. For example, the controller may also monitor the effective pitch of the rotor blades by sensors on the blades.

The location of the sensors 222 - 228 in the described arrangement allow the flow rate to be measured using a pressure from the three upstream facing sensors 222, 224, 226 and the static pressure from the downstream sensor 228. Specifically, if the flow 232 approaches the strut at angle α (as shown in Figure 2), then the total pressure experienced by the forward facing sensor 224 will be given by: p₀+½ρU₀²cos²α₀, and the total pressure apparent to lateral sensor 226 is p₀+ ½ρU₀²cos²(β/2-α₀).

The two remaining sensors 222 and 228 have no inlet normal to the direction of flow given the flow condition shown in Figure 2 and so only detect the static pressure p₀ of the inlet flow. The static pressure p₀ is the pressure head resultant from the column of water from the free surface to the sensor depth. The dynamic head at the flow facing sensors 224, 226 is determined by subtraction of the static pressure measurement at non-flow facing sensors 222, 228.

Using the above sensor relationships, the inlet swirl angle α₀ and flow velocity U₀ may be determined by solving the resulting simultaneous equations to provide a figure for the dynamic head at each sensor h224= ½ρU₀²cos²α₀ and h226 = ½ρU₀²cos²(β/2-α₀) where h224, h226, p, and β are known. The inlet axial velocity Uₓ₀ through the turbine may also then be determined with knowledge of α₀ and U₀.

In addition, the downstream sensor 228 sees the total head p₃+½ρU₃²cos²α₃ and as mass continuity requires that Uₓ₀ and Uₓ₃ are equal, the angle of exit swirl α₃ may be determined as arcos(U₃/Uₓ₀). p₃-p₀ is the static pressure reduction resulting from work transfer to the turbine rotor.

In use, the tidal water passes through the flow passage, thereby rotating the contra-rotating blades of the generator and generating power. The sensors detect the flow conditions and exit swirl produced by the rotating blades and sends corresponding signals to the control system. There the controller calculates the exit swirl conditions and a desired pitch for the blades so as to reduce exit swirl and maximise the efficiency of the generator. Once calculated, the controller provides the pitch control system with an appropriate signal and the pitch is adjusted. This is an iterative process which is carried out as required so as to maintain the maximum output of the generator.

## Claims

1. A generator arrangement, comprising:
a generator (12) located within a flow passage (16) wherein the flow passage (16) has an inlet and an outlet, and the generator (12) includes at least one contra-rotating blade arrangement (13) which is configured to be rotated about a principle axis of the generator (12) by a flow of liquid in the flow passage (16), and wherein at least one of the contra-rotating blades (13) has an adjustable pitch;
an array of sensors (222, 224, 226, 228) located downstream of the blade arrangement (13) for detecting the outlet flow conditions;
a controller (26) for determining the outlet flow conditions on the basis of conditions sensed by the sensor array (222, 224, 226, 228); and,
a pitch control system (24) for adjusting the pitch of the at least one blade (13) based on the determined outlet flow conditions so as to affect the flow conditions at the outlet of the flow passage (16).

2. A generator arrangement as claimed in claim 1 wherein the at least one sensor array (222, 224, 226, 228) is located on a support member (20a, 20b).

3. A generator arrangement as claimed in claim 2 wherein the support member (20a, 20b) is a strut for supporting the electrical generator (12) within the flow passage (16).

4. A generator arrangement as claimed in any preceding claim wherein the sensor array (222, 224, 226, 228) includes three upstream sensors (222, 224, 226) and one downstream sensor (228).

5. A generator arrangement as claimed in any preceding claim wherein the sensors are pressure sensors (222, 224, 226, 228).

6. A generator arrangement as claimed in any of claims 2 to 5 wherein the sensors (222, 224, 226, 228) are located within a cavity (222a - 228a) which has a longitudinal axis extending from the surface of the support member (20, 20b), the cavity (222a - 228a) being sized and shaped so as to expose the sensor (222, 224, 226, 228) to a predetermined angle of the flow velocity along the longitudinal axis of the cavity (222a, 224a, 226a, 228a).

7. A generator arrangement as claimed in any preceding claim wherein the sensor array (222, 224, 226, 228) includes at least two lateral sensors (222, 226) arranged equidistantly from a common axis.

8. A generator arrangement as claimed in any preceding claim wherein the sensor array (222, 224, 226, 228) includes at least one upstream sensor (224) and one downstream sensor (228) along the common axis (230).

9. A generator arrangement as claimed in any of claims 6 to 8 wherein the support member (20a, 20b) is rounded and the longitudinal axes of the cavities (222a 226a) of the lateral sensors (222, 226) are separated by an included angle of approximately 60 degrees.

10. A generator arrangement as claimed in any preceding claim further comprising a second sensor array which is arranged to detect the flow conditions in the direction of flow is opposite to that for which the first sensor array is configured to detect.

## Patentansprüche

1. Generatoranordnung, Folgendes umfassend:
einen innerhalb eines Strömungsdurchlasses (16) angebrachten Generator (12), wobei der Strömungsdurchlass (16) einen Einlass und einen Auslass aufweist und der Generator (12) wenigstens eine gegenrotierende Schaufelanordnung (13) enthält, die dafür ausgelegt ist, durch eine Strömung von Flüssigkeit in dem Strömungsdurchlass (16) um eine Hauptachse des Generators (12) rotiert zu werden, und wobei wenigstens eine der gegenrotierenden Schaufeln (13) eine verstellbare Neigung aufweist;
ein der Schaufelanordnung (13) nachgelagert angeordneter Array von Sensoren (222, 224, 226, 228) zum Ermitteln der Auslass-Strömungs-Bedingungen;
eine Steuereinheit (26) zum Bestimmen der Auslass-Strömungs-Bedingungen auf der Basis von durch den Sensor-Array (222, 224, 226, 228) wahrgenommenen Bedingungen; und
ein Neigungssteuerungssystem (24) zum auf festgelegten Auslass-Strömungs-Bedingungen basierenden Anpassen der Neigung wenigstens einer Schaufel (13), sodass die Strömungsbedingungen am Auslass des Strömungsdurchlasses (16) beeinflusst werden.

2. Generatoranordnung nach Anspruch 1, wobei wenigstens ein Sensor-Array (222, 224, 226, 228) auf einem Stützelement (20a, 20b) angebracht ist.

3. Generatoranordnung nach Anspruch 2, wobei das Stützelement (20a, 20b) eine Strebe zum Stützen des elektrischen Generators (12) innerhalb des Strömungsdurchlasses (16) ist.

4. Generatoranordnung nach einem der vorhergehenden Ansprüche, wobei der Sensor-Array (222, 224, 226, 228) drei vorgelagerte Sensoren (222, 224, 226) und einen nachgelagerten Sensor (228) enthält.

5. Generatoranordnung nach einem der vorhergehenden Ansprüche, wobei die Sensoren Drucksensoren (222, 224, 226, 228) sind.

6. Generatoranordnung nach einem der Ansprüche 2 bis 5, wobei die Sensoren (222, 224, 226, 228) innerhalb einer Aushöhlung (222a - 228a) angebracht sind, die eine sich von der Oberfläche des Stützelements (20, 20b) erstreckende Längsachse aufweist, wobei die Aushöhlung (222a - 228a) so dimensioniert und geformt ist, dass sie den Sensor (222, 224, 226, 228) einem vorher festgelegten Winkel der Strömungsgeschwindigkeit entlang der Längsachse der Aushöhlung (222a, 224a, 226a, 228a) aussetzt.

7. Generatoranordnung nach einem der vorhergehenden Ansprüche, wobei der Sensor-Array (222, 224, 226, 228) wenigstens zwei seitliche Sensoren (222, 226) enthält, die mit gleichem Abstand von einer gemeinsamen Achse angeordnet sind.

8. Generatoranordnung nach einem der vorhergehenden Ansprüche, wobei der Sensor-Array (222, 224, 226, 228) wenigstens einen vorgelagerten Sensor (224) und einen nachgelagerten Sensor (228) entlang der gemeinsamen Achse (230) enthält.

9. Generatoranordnung nach einem der Ansprüche 6 bis 8, wobei das Stützelement (20a, 20b) abgerundet ist und die Längsachsen der Aushöhlungen (222a, 226a) der seitlichen Sensoren (222, 226) durch einen enthaltenen Winkel von ungefähr 60 Grad getrennt sind.

10. Generatoranordnung nach einem der vorhergehenden Ansprüche, weiter umfassend einen zweiten Sensor-Array, der so angeordnet ist, dass er die Strömungsbedingungen für die Strömungsrichtung ermittelt, die derjenigen entgegengesetzt ist, für deren Ermittlung der erste Sensor-Array ausgelegt ist.

## Revendications

1. Générateur équipé, comprenant :
un générateur (12) situé à l'intérieur d'un passage d'écoulement (16) où le passage d'écoulement (16) comprend une entrée et une sortie, et le générateur (12) comprend au moins un ensemble de lames contre-rotatives (13) qui est configuré pour tourner autour d'un axe principal du générateur (12) sous l'effet d'un écoulement de liquide dans le passage d'écoulement (16), et où au moins l'une des lames contre-rotatives (13) a un pas réglable ;
une matrice de capteurs (222, 224, 226, 228) située en aval de l'ensemble de lames (13) pour détecter les conditions d'écoulement de sortie ;
une unité de commande (26) permettant de déterminer les conditions d'écoulement de sortie en fonction des conditions détectées par la matrice de capteurs (222, 224, 226, 228) et
un système de commande du pas (24) pour régler le pas d'au moins une lame (13) en fonction des conditions d'écoulement de sortie déterminée pour jouer sur les conditions d'écoulement à la sortie du passage d'écoulement (16).

2. Générateur équipé selon la revendication 1, où ladite au moins une matrice de capteurs (222, 224, 226, 228) est situé sur un élément support (20a, 20b).

3. Générateur équipé selon la revendication 2, où l'élément support (20a, 20b) est une entretoise permettant de supporter le générateur électrique (12) dans le passage d'écoulement (16).

4. Générateur équipé selon l'une quelconque des revendications précédentes, où la matrice de capteurs (222, 224, 226, 228) comprend trois capteurs en amont (222, 224, 226) et un capteur en aval (228).

5. Générateur équipé selon l'une quelconque des revendications précédentes, où les capteurs sont des capteurs de pression (222, 224, 226, 228).

6. Générateur équipé selon l'une quelconque des revendications 2 à 5, où les capteurs (222, 224, 226, 228) sont situés à l'intérieur d'une cavité (222a - 228a) qui présente un axe longitudinal s'étendant depuis la surface de l'élément support (20, 20b), la cavité (222a - 228a) étant dimensionnée et façonnée de façon à exposer le capteur (222, 224, 226, 228) à un angle prédéterminé de la vitesse d'écoulement le long de l'axe longitudinal de la cavité (222a, 224a, 226a, 228a).

7. Générateur équipé selon l'une quelconque des revendications précédentes, où la matrice de capteurs (222, 224, 226, 228) comprend au moins deux capteurs latéraux (222, 226) disposés de manière équidistante à partir d'un axe commun.

8. Générateur équipé selon l'une quelconque des revendications précédentes, où la matrice de capteurs (222, 224, 226, 228) comprend au moins un capteur en amont (224) et un capteur en aval (228) le long de l'axe commun (230).

9. Générateur équipé selon l'une quelconque des revendications 6 à 8, où l'élément support (20a, 20b) est arrondi et les axes longitudinaux des cavités (222a 226a) des capteurs latéraux (222, 226) sont séparés par un angle de 60 degrés environ.

10. Générateur équipé selon l'une quelconque des revendications précédentes, comprenant en outre une seconde matrice de capteurs, disposée pour détecter les conditions d'écoulement dans le sens d'écoulement, opposé à celui pour lequel la première matrice de capteurs est configurée pour détecter.
